(19) Europäisches Patentamt
European Patent Office
Office européen des brevets

(11) Veröffentlichungsnummer: **0 312 636 B1**

(12) **EUROPÄISCHE PATENTSCHRIFT**

(45) Veröffentlichungstag der Patentschrift: **21.11.91**

(51) Int. Cl.⁵: **B60C 27/06**, B60C 27/14

(21) Anmeldenummer: **87115502.4**

(22) Anmeldetag: **22.10.87**

(54) **Gleitschutzvorrichtung für Räder.**

(43) Veröffentlichungstag der Anmeldung:
**26.04.89 Patentblatt 89/17**

(45) Bekanntmachung des Hinweises auf die Patenterteilung:
**21.11.91 Patentblatt 91/47**

(84) Benannte Vertragsstaaten:
**AT BE CH DE ES FR GB GR IT LI LU NL SE**

(56) Entgegenhaltungen:
**DE-A- 1 680 436**
**DE-A- 3 545 528**

(73) Patentinhaber: **AUTOTYP S.A.**
**Case Postale 53 Route de Lausanne**
**CH-1037 Etagnières(CH)**

(72) Erfinder: **Métraux, Michele**
**Case Postale 53**
**CH-1037 Etagnières/Lausanne(CH)**

(74) Vertreter: **Rottmann, Maximilian R.**
**c/o Rottmann, Maspoli + Zimmermann AG**
**Glattalstrasse 37**
**CH-8052 Zürich(CH)**

Rank Xerox (UK) Business Services

## Beschreibung

Die Erfindung betrifft eine Gleitschutzvorrichtung für Räder, insbesonders Fahrzeugräder, wobei ein Mittelteil sich im montierten Zustand neben der Radaussenseite befindet, wobei der Mittelteil im montierten Zustand über Arme Gleitschutzmittel, insbesonders Gleitschutzketten, um die Lauffläche des Rades verlaufend festhält, wobei das Gleitschutzmittel einen grösseren Durchmesser aufweist als die Lauffläche des Rades und in einem vormontierten Zustand oben am Rad auf der Lauffläche des Rades liegt und unten am Rad neben einen durch Anliegen des Rades gegen eine Anliegefläche blockierten Teil der Lauffläche liegt, wobei der Mittelteil durch elastische Einzieh- und Festhalteteile mit dem Rad verbunden ist und die Einzieh- und Festhalteteile gespannt verlaufen zumindest wenn sich das Gleitschutzmittel in dem vormontierten Zustand befindet um den Mittelteil in Richtung auf das Rad zu belasten, wobei die Einzieh- und Festhalteteile die im vormontierten Zustand neben dem blockierten Teil der Lauffläche liegende Teile des Gleitschutzmittels auf die Lauffläche ziehen sobald der blockierte Teil der Lauffläche durch Rollen des Rades auf der Anliegefläche frei wird, wobei die Einzieh- und Festhalteteile über den Mittelteil und die Arme das Gleitschutzmittel nach dem Einziehen in den montierten Zustand am Rad festhält, wobei der Mittelteil einen Halterungsteil für die Arme aufweist und der Halterungsteil zwei Lagerungsteile aufweist welche im Verhältnis zu einander drehbar gelagert sind und je zumindest einen der Arme aufweist, wobei die Einzieh- und Festhalteteile und der Halterungsteil für die Arme auf einer gemeinsamen Achse gelagert sind und im Verhältnis zu einander drehbar sind, und wobei das Gleitschutzmittel sich um die Lauffläche des Rades bewegen kann.

Gleitschutzvorrichtungen der eingangs beschriebenen Art sind aus der Offenlegungsschrift DE 35 45 528 bereits bekannt. Bei dieser Gleitschutzvorrichtung bestehen Einzieh- und Festhalteteile aus Gummischlingen die als Einzelteile um Erhöhungen hinter einem Lagerungsteil verlaufen und Einhakglieder aufweisen.

Es hat sich gezeigt, dass diese Gummischlingen durch Reibung gegen diese Erhöhungen nach allzu kurzer Zeit verschliessen werden weil Schmutzpartikel beim Fahren zwischen die Reibungsflächen dieser Teile gelangen. Ausserdem kann nicht ausgeschlossen werden dass die Gummischlingen falsch verlaufend an die Felge angehakt wird denn es kann nicht verhindert werden zwei naheliegende Gummischlingen kreuzweise verlaufend anzuhaken und/oder jede Gummischlinge verdreht verlaufend anzubringen.

Bei der obengenannten Gleitschutzvorrichtung befindet sich der Lagerungsteil mit den Gummischlingen und zwei Lagerungsteile mit den Armen auf einem Bolzen. Durch Aufschrauben einer Mutter auf dem Bolzen werden die Lagerungsteile mit dem Armen verhältnismässig fest in Richtung gegen einander gedrückt um diese Halterungsteile beim Fahren in ihren voraus bestimmten Positionen im Verhältnis zu einander zu halten, wobei der Druck nicht grösser ist als dass die Lagerungsteile beim zusammenklappen der Gleitschutzvorrichtung aus diesen Positionen im Verhältnis zu einander verdreht werden können.

Durch Einschrauben der Mutter wird auch der Lagerungsteil mit den Gummischlingen fest gegen den einen der Lagerungsteile mit den Armen gedrückt und dadurch ist eine freie Drehbewegung zwischen dem Lagerungsteil mit den Gummischlingen und den Lagerungsteilen mit den Armen nicht möglich. Eine freie Drehbewegung zwischen dem Lagerungsteil mit den Einzieh- und Festhalteteilen und den beiden Lagerungsteilen mit den Armen ist jedoch eine Voraussetzung um eine einwandfreie Drehbewegung des Gleitschutzmittels um das Rad zu ermöglichen ohne dass diese Drehbewegung auf die Einzieh- und Festhalteteile überführt wird und diese unvorteilhaft belastet.

Augabe der Erfindung ist, diese Probleme zu beseitigen und zu bewirken dass die Einzieh- und Festhalteteile länger halten, dass eine falsche Montage der Einzieh- und Festhalteteile an dem Rad verhindert wird und dass Einzieh- und Festhalteteile nach Montage auf der Achse im Verhältnis zu den Lagerteilen mit den Armen frei drehbeweglich ist wobei jedoch die Lagerungsteile unter Druck stehen. Erfindungsgemäss wird dies im Wesentlichen mittels der aus dem Patentanspruch 1 ersichtlichen Merkmale zustandegebracht.

Dank dem Umstand, dass die Einzieh- und Festhalteteile mit einem Zentrumteil integriert sind braucht nicht jeder Einzieh- und Festhalteteil separat montiert werden, die Haltbarkeit dieser Teile wird wesentlich verbessert weil sie keine Schmutzpartikel aufweisende Reibungsflächen haben und diese Teile können nicht kreuzweise oder verdreht montiert werden. Dank dem Umstand, dass der Zentrumteil und der Halterungsteil im Verhältnis zu einander frei drehbar sind können die Drehbewegungen der Gleitschutzmittel um das Rad nicht auf die Einzieh- und Festhalteteile überführt werden und es ist deshalb nicht möglich dass diese von diesen Drehbewegungen belastet werden.

Anhang der Zeichnungen wird die Erfindung beispielsweise näher erläutert. Es zeigen:

Fig. 1 eine perspektivische Ansicht einer erfindungsgemässen Gleitschutzvorrichtung;

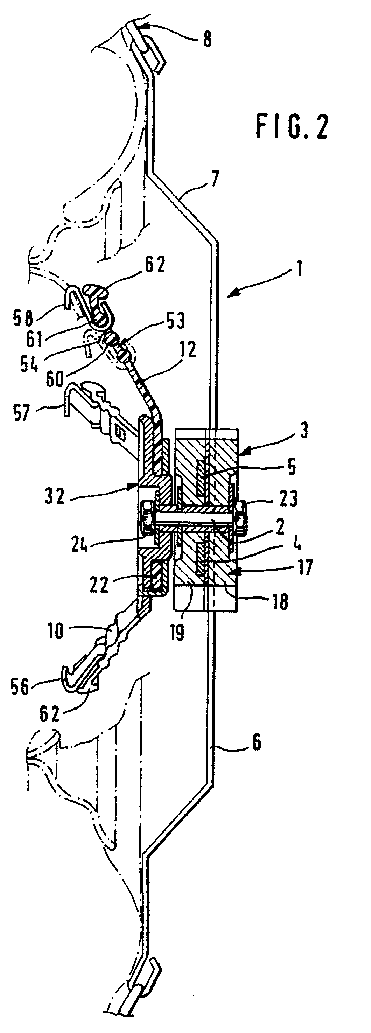

Fig. 2 einen Schnitt nach der Linie II-II in Fig. 1;

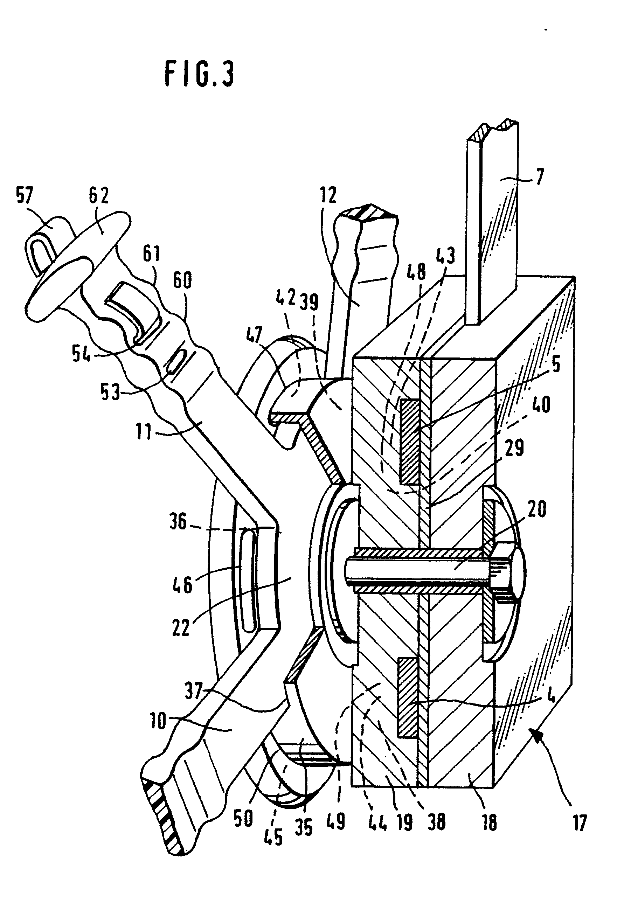

Fig. 3 eine perspektivische Ansicht eines Mittelteils der erfindungsgemässen Gleitschutzvorrichtung;

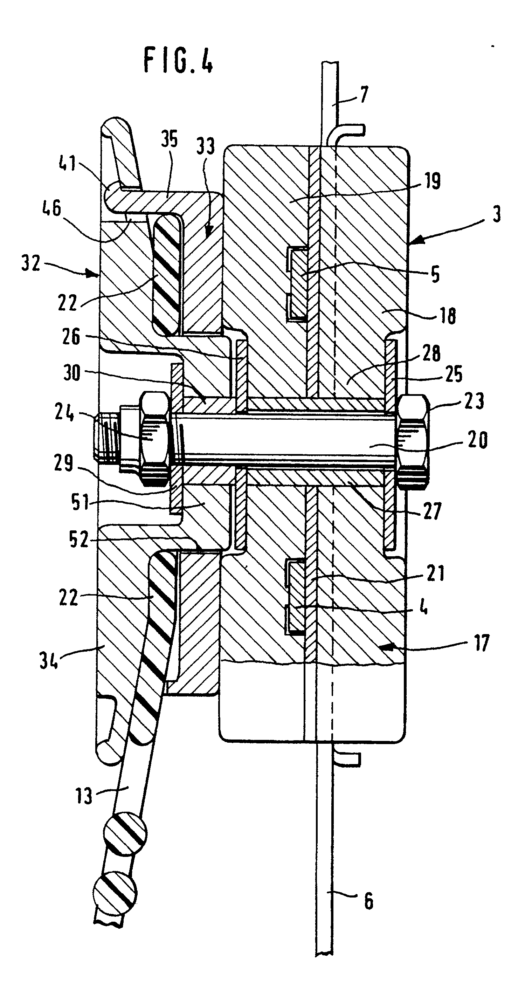

Fig. 4 einen Schnitt des Mittelteils der erfindungsgemässen Gleitschutzvorrichtung.

Die in der Zeichnung dargestellte Gleitschutzvorrichtung 1 für Räder, insbesonders Fahrzeugräder 2, weist einen Mittelteil 3, vier von diesem ausgehende Arme 4-7, an den Armen angeordnete Gleitschutzmittel 8, insbesondere eine Gleitschutzkette, und mehrere, beispielsweise fünf, Einzieh- und Festhalteteile 9-13 auf.

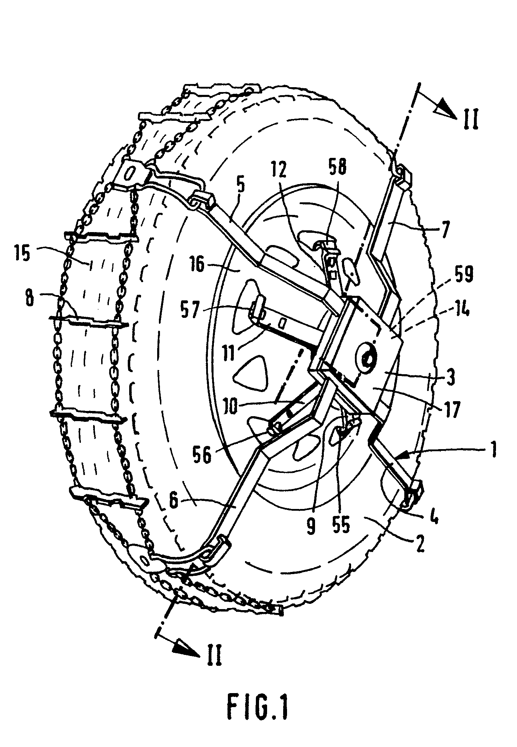

Wie aus der Figur 1 hervorgeht befindet sich der Mittelteil 3 im montierten Zustand neben der Radaussenseite 14 und die Gleitschutzkette 8 verläuft um die Lauffläche 15 des Rades 2.

Um die Gleitschutzkette 8 in diesen Zustand zu bringen hat dieselbe einen grösseren Durchmesser als die Lauffläche 15 des Rades 2 und wird zunächst oben auf die Lauffläche 15 gelegt und unten neben den gegen die Fahrbahn oder eine andere Anliegefläche anliegenden und dadurch blockierten Teil der Lauffläche 15. Danach werden ein Einzieh- und Festhalteteil 9-13 nach dem anderen gespannt und an das Rad 2 angehängt, vorzugsweise an eine Felge 16 des Rades angehakt, und zwar über Kanten von Felgenlöchern. Da die Einzieh- und Festhalteteile 9-13 nach der Montage am Rad gespannt verlaufen belasten sie den Mittelteil 3 in Richtung auf das Rad 2.

Sobald der blockierte Teil der Lauffläche 15 durch Rollen des Rades 2 auf der Fahrbahn frei wird, ziehen die Einzieh- und Festhalteteile 9-13 die zuerst neben der Lauffläche 15 liegenden Teile der Gleitschutzkette 8 auf die Lauffläche 15. Alle Teile der Gleitschutzkette 8 umgeben schon nach wenigen Umdrehungen des Rades 2 die Lauffläche 15 und die Gleitschutzkette 8 wird von den Einzieh- und Festhalteteilen 9-13 beim Stehen und auch Rollen des Rades 2 in diesem montierten Zustand gehalten.

Die Gleitschutzkette 8 kann sich um die Lauffläche 15 bewegen und sie wird beim Rollen des Rades 2 automatisch gegen den Teil der Lauffläche 15, der hinter dem Anliegeteil der Lauffläche der gegen die Fahrbahn anliegt, gespannt. Der Mittelteil 3 weist einen Halterungsteil 17 auf der aus zwei Lagerungsteilen 18, 19 besteht. Die Lagerungsteile 18, 19 sind im Verhältnis zu einander drehbar auf einer Achse 20 gelagert, wodurch die Gleitschutzvorrichtung 1 nach der Verwendung zusammengeklappt werden kann. Jeder Lagerungsteil 18, 19 hat zwei langgestreckte Vertiefungen in denen jeweils zwei der Arme 4-7 verschiebbar gelagert sind. Zwischen den Lagerungsteilen 18, 19 liegt eine Scheibe 21 die u.a. verhindert dass die Arme des einen Lagerungsteils direkt gegen die Arme des anderen Lagerungsteils anliegen. Auf der Achse 20 sind ausserdem die Einzieh- und Festhalteteile 9-13 gelagert. Um die Bewegung der Gleitschutzkette 8 um die Lauffläche 15 nicht auf die Einzieh- und Festhalteteile 9-13 zu überführen sind die Einzieh- und Festhalteteile 9-3 und der Halterungsteil 17 im Verhältnis zu einander drehbar angeordnet.

Die Einzieh- und Festhalteteile 9-13 sind mit einem Zentrumteil 22 integriert und dieser Zentrumteil 22 sowie der Halterungsteil 17 sind zwischen Spannteilen 23, 24 auf der Achse 20 angeordnet. Im montierten Zustand üben die Spannteile 23, 24 einen Druck auf die Lagerungsteile 18, 19 wodurch sich diese nicht voneinander entfernen können. Der Zentrumteil 22 mit den Einzieh- und Festhalteteilen 9-13 jedoch ist unabhängig vom Druck der Spannteile 23, 24 im Verhältnis zum Halterungsteil 17 drehbar gelagert, wodurch erreicht wird dass die Drehbewegung der Gleitschutzkette 8, der Arme 4-7 und dadurch des Halterungsteils 17 beim Rollen des Rades 2 auf keinen Fall auf den Zentrumteil 22 und dessen Einzieh- und Festhalteteile 9-13 überführt wird unabhängig davon ob die Lagerungsteile 18, 19 mit den Spannteilen 23, 24 fest oder weniger fest gegeneinander gespannt sind.

Dies kann durch verschiedene Teilkonstruktionen erreicht werden wobei die auf den Zeichnungen illustrierte Konstruktion einfach und sicher ist. Bei dieser Konstruktion besteht die Achse 20 aus einem Gewindebolzen, der eine Spannteil 23 aus dem Kopf des Gewindebolzens und der andere Spannteil 24 aus einer auf den Gewindebolzen aufgeschraubten Mutter. Auf der Achse 20 befinden sich zwei Scheiben 25, 26 und dazwischen eine Hülse 27. Ein Abschnitt 28 des Halterungsteils 17 ist auf der Hülse 27 zwischen den Scheiben 25, 26 gelagert, wobei die Hülse 27 etwas kürzer ist als der Abschnitt 28.

Zwischen der Scheibe 26 und einer dritten Scheibe 29 ist eine zweite Hülse 30 gelagert und auf dieser zweiten Hülse 30 ist der Zentrumteil direkt oder über einen Gehäuseteil 51 mit achsialem Spiel gelagert. Um ein ausreichend achsiales Spiel sicherzustellen ist die Hülse 30 länger als der darauf gelagerte Gehäuseteil 51. Die drei Scheiben 25, 26, 29 sowie die zwei Hülsen 27, 30 werden durch die Spannteile 23, 24 gegeneinander gespannt, wodurch eine Spannung zwischen den Lagerungsteilen 18, 19 in Richtung gegeneinander durch Anziehen der Mutter 24 entsteht, wobei jedoch der Halterungsteil 17 und der Zentrumteil 22 im Verhältnis zu einander frei drehbar bleiben.

Der Zentrumteil 22 ist in einem Gehäuse 32 angeordnet, das aus einem schalenförmigen Gehäuseteil 33 und aus einer daran befestigten Gehäusestirnwand 34 besteht. Die Seitenwand 35 des schalenförmigen Gehäuseteils 33 weist fünf Öffnungen 36-40 auf die für die Einzieh- und Festhalteteile 9-13 vorgesehen sind. Die Seitenwand 35 hat ausserdem fünf Haken 41-45 zwischen den Öffnungen 36-40 und diese Haken 41-45 greifen in entsprechende Öffnungen 46-50 in der Gehäusestirnwand 34 und halten diese am schalenförmigen Gehäuseteil 33 fest.

Die Grösse der Öffnungen 36-40 in der Seitenwand 35 entsprechen vorzugsweise der Grösse der durchlaufenden Teile der Einzieh-und Festhalteteile 9-13 und die Gehäusestirnwand 34 liegt dichtend an den schalenförmigen Gehäuseteil 33 an, wodurch verhindert wird dass Schmutz, Eis oder Schnee in das Gehäuse 32 dringt.

Das Gehäuse 32 ist über den Teil 51 der Gehäusestirnwand 34 auf der Hülse 30 mit achsialem Spiel gelagert und dieser Teil 51 ragt dichtend durch eine Öffnung 52 in den schalenförmigen Gehäuseteil 33. Hierdurch wird das Gehäuse 32 auch von innen abgedichtet.

Der Zentrumteil 22 und die damit integrierten Einzieh- und Festhalteteile 9-13 bestehen vorzugsweise aus demselben elastischen Material z.B. Gummi oder Kautschuk. Jeder Einzieh-und Festhalteteil 9-13 weist mehrere (z.B. zwei) Öffnungen 53, 54 oder dünne Abschnitte für vorzugsweise S-förmige Haken 55-59 auf. Die Öffnungen 53, 54 oder die dünnen Abschnitte sind im Verhältnis zum Zentrumteil nach einander angeordnet und durch diese können die Haken 55-59 gedrückt werden und dadurch an den jeweiligen Einzieh- und Festhalteteil 9-13 angeordnet werden. Hierdurch ist es möglich die Haken 55-59 in verschiedenen Positionen an den Einzieh- und Festhalteteilen 9-13 anzuordnen wodurch die Haken an verschiedenen Typen von Felgen festgehakt werden können. Jeder Einzieh-und Festhalteteil 9-14 hat ausserdem mehrere (z.B. zwei) querverlaufende Verdickungen 60, 61 um die Teile der Haken 55-59 gedrückt werden sodass die Haken an den Einzieh-und Festhalteteilen 9-13 festsitzen. Der Endabschnitt von jeden Einzieh- und Festhalteteil 9-13 weist vorzugsweise die Form von querverlaufenden Griffen 62 auf, wodurch der entsprechende Einzieh- und Festhalteteil besser gefasst und gespannt werden kann und der jeweilige Haken 55-59 leichter angehakt werden kann.

Als alternative Ausführungen seien erwähnt, dass die Gleitschutzvorrichtung 1 an anderen Rädern als Fahrzeugrädern 2 verwendet werden kann und dass das Gleitschutzmittel 8 anders als eine Gleitschutzkette ausgebildet sein kann. Es ist auch möglich an jedem Lagerungsteil 18, 19 anstatt zwei Armen nur einem Arm, drei Arme u.s.w. anzuordnen. Die Achse 20 kann aus einem anderen Element als aus einem Bolzen bestehen und ein solches Element kann eventuell zwei Gewinde an den beiden Endpartien und zwei Muttern aufweisen. Auch können die Spannteile 23, 24 aus anderen Elementen bestehen als eine Mutter und der Kopf eines Bolzens.

Auch die Form des Zentrumteils 22, die Form und Anzahl der damit integrierten Einzieh- und Festhalteteile 9-13 und die Form des Gehäuses 32 kann verschieden sein. Es sei schliesslich erwähnt dass der Zentrumteil 22 mit den Einzieh- und Festhalteteilen 9-13 aus anderen elastischen Material als Gummi oder Kautschuk bestehen kann und dass diese Teile aus mehreren verschiedenen Materialtypen bestehen können und/oder Armierungen aufweisen können. Auch die Haken 55-59 können S-förmig, C-förmig oder T-förmig sein um in die Löcher von verschiedenartigen Rädern eingehakt werden zu können.

## Patentansprüche

1. Gleitschutzvorrichtung für Räder, insbesonders Fahrzeugräder, wobei ein Mittelteil (3) sich im montierten Zustand neben der Radaussenseite befindet, wobei der Mittelteil (3) im montierten Zustand über Arme (4-7) Gleitschutzmittel (8), insbesonders Gleitschutzketten, um die Lauffläche (15) des Rades (2) verlaufend festhält, wobei das Gleitschutzmittel (8) einen grösseren Durchmesser aufweist als die Lauffläche (15) des Rades (2) und in einem vormontierten Zustand oben am Rad (2) auf der Lauffläche (15) des Rades (2) liegt und unten am Rad (2) neben einen durch Anliegen des Rades (2) gegen eine Anliegefläche blockierten Teil der Lauffläche (15) liegt, wobei der Mittelteil (3) durch elastische Einzieh- und Festhalteteile (9-13) mit dem Rad (2) verbunden ist und die Einzieh- und Festhalteteile (9-13) gespannt verlaufen zumindest wenn sich das Gleitschutzmittel (8) in dem vormontierten Zustand befindet um den Mittelteil (3) in Richtung auf das Rad (2) zu belasten, wobei die Einzieh- und Festhalteteile (9-13) die im vormontierten Zustand neben dem blockierten Teil der Lauffläche (15) liegende Teile des Gleitschutzmittels (8) auf die Lauffläche (15) ziehen sobald der blockierte Teil der Lauffläche (15) durch Rollen des Rades (2) auf der Anliegefläche frei wird, wobei die Einzieh- und Festhalteteile (9-13) über den Mittelteil (3) und die Arme (4-7) das Gleitschutzmittel (8) nach dem Einziehen in den montierten Zustand am Rad (2) festhält, wobei der Mittelteil (3) einen Halterungsteil (17) für die Arme (4-7) aufweist und der Halterungsteil (17) zwei Lagerungsteile (18, 19) aufweist welche im Verhältnis zu einander drehbar gelagert sind und je zumindest einen der Arme (4-7) aufweist, wobei die Einzieh- und Festhalteteile (9-13) und der Halterungsteil (17) für die Arme (4-7) auf einer gemeinsamen Achse (20) gelagert sind und im Verhältnis zu einander drehbar sind, und wobei das Gleitschutzmittel (8) sich um die Lauffläche (15) des Rades (2) bewegen kann, **dadurch gekennzeichnet** dass die Einzieh-und Festhalteteile (9-13) mit einem Zentrumteil (22) integriert sind, wobei der Zentrumteil (22) und der Halterungsteil (17) zwischen Spannteilen (23, 24) auf der Achse (20) angeordnet sind, und wobei die Spannteile (23-24) im montierten Zustand einen Druck auf die Lagerungsteile (18, 19) des Halterungsteils (17) ausüben der Zentrumteil (22) jedoch unabhängig von dem Druck der Spannteile (23, 24) im Verhältnis zum Halterungsteil (17) frei drehbar gelagert ist.

2. Gleitschutzvorrichtung nach Anspruch 1, **dadurch gekennzeichnet** dass zwischen den Spannteilen (23, 24) auf der Achse (20) Scheiben (25, 26, 29) und zwischen diesen angeordnete Hülsen (27, 30) gelagert sind, wobei die Scheiben (25, 26, 29) und Hülsen (27, 30) mit den Spannteilen (23, 24) gegeneinander gespannt sind, wobei der Halterungsteil (17) auf einer(27) der Hülsen (27, 30) angeordnet ist und zwei (25, 26) von den Scheiben (25, 26, 29) die Lagerungsteile (18, 19) des Halterungsteils (17) gegeneinander spannen, und wobei der Zentrumteil (22) auf einer anderen (30) der Hülsen (27, 30) direkt oder über ein Gehäuse (32) angeordnet ist und mit achsialem Spiel zwischen zwei (26, 29) von den Scheiben (25, 26, 29) eingreift.

3. Gleitschutzvorrichtung nach Anspruch 2, **dadurch gekennzeichnet** dass zwischen den Spannteilen (23, 24) drei Scheiben (25, 26, 29) und zwei dazwischenliegende Hülsen (27, 30) angeordnet sind, wobei die eine Hülse (27) etwas kürzer ist als ein Abschnitt (28) des Halterungsteils (17) der sich zwischen den Scheiben (25, 26) auf beiden Seiten dieser Hülse (27) befindet, und wobei die andere Hülse (30) länger ist als ein Abschnitt (31) des Zentrumteils (22) der sich zwischen den Scheiben (26, 29) auf beiden Seiten dieser anderen Hülse (30) befindet.

4. Gleitschutzvorrichtung nach einem der vorhergehenden Ansprüchen, **dadurch gekennzeichnet** dass der Zentrumteil (22) in einem Gehäuse (32) angeordnet ist und über dieses auf der Achse (20) drehbar gelagert ist, wobei das Gehäuse (32) den Zentrumteil (22) vollständig einschliesst und die Einzieh- und Festhalteteile (9-13) in radiale Richtung von dem Zentrumteil (22) durch Öffnungen (36-40) des Gehäuses (32) aus dem Gehäuse (32) ragen und wobei die Grösse der Öffnungen (36-40) der Grösse der durch diese ragende Teile der Einzieh- und Festhalteteile (9-13) entsprechen.

5. Gleitschutzvorrichtung nach Anspruch 4, **dadurch gekennzeichnet** dass das Gehäuse (32) einen schalenförmigen Gehäuseteil (33) aufweist dessen Seitenwand (35) mit Öffnungen (36-40) für die Einzieh- und Festhalteteile (9-13) versehen sind, und dass die Seitenwand Haken (41-45) aufweisen die in Öffnungen (46-50) einer Gehäusestirnwand (34) eingreifen und diese an dem schalenförmigen Gehäuseteil (33) festhalten.

6. Gleitschutzvorrichtung nach einem der vorhergehenden Ansprüche, **dadurch gekennzeichnet** dass der Zentrumteil (22) und die damit integrierten Einzieh- und Festhalteteile (9-13) aus demselben Material, vorzugsweise Gummi oder Kautschul, bestehen.

7. Gleitschutzvorrichtung nach einem der vorhergehenden Ansprüchen, **dadurch gekennzeichnet** dass jeder Einzieh- und Festhalteteil (9-13) mehrere Öffnungen (53, 54) oder dünne Abschnitte für Haken (55-59) aufweist welche Haken (55-59) im montierten Zustand an das Rad (2) gehakt sind, wobei die Öffnungen (53, 54) oder die dünnen Abschnitte im Verhältnis zum Zentrumteil (22) nach einander angeordnet sind.

8. Gleitschutzvorrichtung nach Anspruch 7, **dadurch gekennzeichnet** dass in die Öffnungen (53, 54) eingehakte Haken (55-59) S-förmig, C-förmig oder T-förmig sind um in die Löcher von verschiedenartigen Rädern eingehakt werden zu können.

9. Gleitschutzvorrichtung nach Anspruch 7 oder 8, **dadurch gekennzeichnet** dass jeder Einzieh- und Festhalteteil (9-13) querverlaufender Verdickungen (60, 61) aufweist um die in die Öffnungen (53, 54) eingehakte Haken (55-59) greifen.

10. Gleitschutzvorrichtung nach einem der vorhergehenden Ansprüche, **dadurch gekennzeichnet** dass jeder Einzieh- und Festhalteteil (9-13) an einem freien Endabschnitt querlaufende Griffe (62) aufweist.

**Claims**

1. Anti-skid device for wheels, in particular vehicle wheels, in the assembled state a central part (3) being located close to the outside of the wheel, in the assembled state the central part (3) by way of arms (4-7) securing anti-skid means (8), in particular anti-skid chains, extending around the tread (15) of the wheel (2), the anti-skid means (8) having a larger diameter than the tread (15) of the wheel (2) and in a pre-assembled state at the top of the wheel (2) lying on the tread (15) of the wheel (2) and at the bottom of the wheel (2) lying close to a part of the tread (15) locked by the abutment of the wheel (2) against a support surface, the central part (3) being connected to the wheel (2) by resilient pulling-in and retaining parts (9-13) and the pulling-in and retaining parts (9-13) extend in a taut manner at least when the anti-skid means (8) are located in the pre-assembled state in order to load the central part (3) in the direction of the wheel (2), the pulling-in and retaining parts (9-13) pulling the parts of the anti-skid means (8) located beside the locked part of the tread (15) in the pre-assembled state, onto the tread (15) as soon as the locked part of the tread (15) becomes free due to rolling of the wheel (2) on the support surface, the pulling-in and retaining parts (9-13), by way of the central part (3) and the arms (4-7) retaining the anti-skid means (8) after the pulling-in into the assembled state on the wheel (2), the central part (3) comprising a mounting part (17) for the arms (4-7) and the mounting part (17) comprising two bearing parts (18, 19), which are mounted to rotate in relation to each other and comprises respectively at least one of the arms (4-7), the pulling-in and retaining parts (9-13) and the mounting part (17) for the arms (4-7) being mounted on a common shaft (20) and being able to rotate in relation to each other and the anti-skid means (8) being able to move around the tread (15) of the wheel (2), characterised in that the pulling-in and retaining parts (9-13) are integrated with a centre part (22), the centre part (22) and the mounting part (17) being located between clamping parts (23, 24) on the shaft (20), and in the assembled state the clamping parts (23-24) exerting pressure on the bearing parts (18, 19) of the mounting part (17), however the centre part (22) is mounted to rotate freely in relation to the mounting part (17) independently of the pressure of the clamping parts (23, 24).

2. Anti-skid device according to Claim 1, characterised in that mounted between the clamping parts (23, 24) on the shaft (20) are discs (25, 26, 29) and sleeves (27, 30) located between them, the discs (25, 26, 29) and sleeves (27, 30) being clamped one against the other by the clamping parts (23, 24), the mounting part (17) being located on one (27) of the sleeves (27, 30) and two (25, 26) of the discs (25, 26, 29) clamping the bearing parts (18, 19) of the mounting part (17) one against the other, and the centre part (22) being located on another (30) of the sleeves (27, 30) directly or by way of a housing (32) and engaging with axial clearance between two (26, 29) of the discs (25, 26, 29).

3. Anti-skid device according to Claim 2, characterised in that disposed between the clamping parts (23, 24) are three discs (25, 26, 29) and two sleeves (27, 30) lying therebetween, one sleeve (27) being somewhat shorter than a section (28) of the mounting part (17), which is located between the discs (25, 26) on both sides of this sleeve (27) and the other sleeve (30) being longer than a section (31) of the centre part (22), which is located between the discs (26, 29) on both sides of this other sleeve (30).

4. Anti-skid device according to one of the preceding Claims, characterised in that the centre part (22) is located in a housing (32) and is mounted to rotate by way of the latter on the shaft (20), the housing (32) completely enclosing the centre part (22) and the pulling-in and retaining parts (9-13) projecting from the housing (32) in the radial direction from the centre part (22) through openings (36-40) in the housing (32), and the size of the openings (36-40) corresponding to the size of the parts of the pulling-in and retaining parts (9-13) projecting through the latter.

5. Anti-skid device according to Claim 4, characterised in that the housing (32) comprises a dish-shaped housing part (33) whereof the side walls (35) are provided with openings (36-40) for the pulling-in and retaining parts (9-13) and that the side walls comprise hooks (41-45), which engage in openings (46-50) in an end wall (34) of the housing and retain the latter on the dish-shaped housing part (33).

6. Anti-skid device according to one of the preceding Claims, characterised in that the centre part (22) and the pulling-in and retaining parts (9-13) integrated therewith consist of the same material, preferably rubber or caoutchouc.

7. Anti-skid device according to one of the preceding Claims, characterised in that each pulling-in and retaining part (9-13) comprises several openings (53, 54) or thin sections for hooks (55-59), which hooks (55-59) are hooked onto the wheel (2) in the assembled state, the openings (53, 54) or the thin sections being arranged one after the other in relation to the centre part (22).

8. Anti-skid device according to Claim 7, characterised in that hooks (55-59) hooked into the openings (53, 54) are S-shaped, C-shaped or T-shaped in order to be able to be hooked into the holes of wheels of different types.

9. Anti-skid device according to Claim 7 or 8, characterised in that each pulling-in and retaining part (9-13) comprises transversely extending thickened portions (60, 61) in order to engage the hooks (55-59) hooked into the openings (53, 54).

10. Anti-skid device according to one of the preceding Claims, characterised in that each pulling-in and retaining part (9-13) comprises handles (62) extending transversely on a free end section.

## Revendications

1. Dispositif antidérapant pour roues, en particulier roues de véhicule, dans lequel : une partie médiane (3) se trouve à l'état monté près du côté extérieur de la roue ; la partie médiane (3) à l'état monté maintient grâce à des bras (4-7) des moyens antidérapants (8), en particulier des chaînes antidérapantes, autour de la surface de roulement (15) de la roue (2) ; les moyens antidérapants (8) présentent un diamètre supérieur à celui de la surface de roulement (15) de la roue (2) et, dans un état de pré-montage, ils sont situés pour la partie supérieure de la roue (2) sur la surface de roulement (15) de la roue (2) et pour la partie inférieure de la roue (2) à côté d'une zone de la surface de roulement (15) qui est inaccessible en raison de l'appui de la roue (2) contre une surface d'appui ; la partie médiane (3) est fixée à la roue (2) par des tirants élastiques (9-13) de maintien, les tirants (9-13) de maintien étant sous tension, au moins lorsque les moyens antidérapants (8) se trouvent à l'état de prémontage, de manière à appliquer la partie médiane (3) sur la roue (2) ; les tirants (9-13) de maintien tirent, sur la surface de roulement (15) les parties des moyens antidérapants (8) qui à l'état de pré-montage, sont au voisinage de la zone inaccessible de la surface de roulement (15), aussitôt que la zone inaccessible de la surface de roulement (15) est libérée lors du roulement de la roue (2) sur la surface d'appui ; les tirants (9, 13) de maintien maintiennent, par l'intermédiaire de la partie médiane (3) et des bras (4-7), les moyens antidérapants (8) sur la roue (2) après le tirage dans l'état monté ; la partie médiane (3) présente une partie de fixation (17) pour les bras (4-7) et la partie de fixation (17) présente deux éléments de montage (18, 19) qui sont montés en rotation l'un par rapport à l'autre et qui comportent chacun au moins un des bras (4-7) ; les tirants (9-13) de maintien et la partie de fixation (17) pour les bras (4-7) sont montés sur un axe commun (20) et avec possibilité de rotation des uns par rapport à l'autre ; et les moyens antidérapants (8) peuvent se déplacer autour de la surface de roulement (15) de la roue (2),

caractérisé en ce que les tirants (9-13) de maintien sont d'une seule pièce avec une partie centrale (22), la partie centrale (22) et la partie de fixation (17) étant disposées entre des éléments de serrage (23, 24) sur l'axe (20), et les éléments de serrage (23, 24) exerçant à l'état monté une pression sur les éléments de montage (18, 19) de la partie de fixation (17), cependant que la partie centrale (22) est montée de manière à tourner librement par rapport à la partie de fixation (17) indépendamment de la pression des moyens de serrage (23, 24).

2. Dispositif selon la revendication 1, caractérisé en ce que des disques (25, 26, 29) sont montés entre les éléments de serrage (23, 24) sur l'axe (20) et des manchons (27, 30) sont montés entre ces disques, les disques (26, 27, 29) et les manchons (27, 30) étant serrés les uns contre les autres par les éléments de serrage (23, 24), la partie de fixation (17) étant agencée sur l'un (27) des manchons (27, 30) et deux (25, 26) des disques (25, 26, 29) serrant les éléments de montage (18, 19) de la partie de fixation (17) l'un contre l'autre, et la partie centrale (22) étant agencée sur un autre (30) des manchons (27, 30) directement ou par l'intermédiaire d'une cage (32) et s'insérant avec jeu axial entre deux (26, 29) des disques (25, 26, 29).

3. Dispositif selon la revendication 2, caractérisé en ce que trois disques (26, 27, 29) et deux manchons intermédiaires (27, 30) sont disposés entre les éléments de serrage (23, 24), l'un (27) des manchons étant quelque peu plus court qu'une section (28) de la partie de fixation (17) qui se trouve entre les disques (25, 26) placés sur les deux côtés de ce manchon (27) et l'autre manchon (30) étant plus long qu'une section (31) de la partie centrale (22) qui se trouve entre les disques (26, 29) placés sur les deux côtés de cet autre manchon (30).

4. Dispositif selon l'une des revendications précédentes, caractérisé en ce que la partie centrale (22) est disposée dans une cage (32) et est montée en rotation sur l'axe (20) par l'intermédiaire de cette cage, la cage (32) entourant complètement la partie centrale (22) et les tirants (9-13) de maintien faisant radialement saillie hors de ladite cage (32) à partir de la partie centrale (22) à travers des ouvertures (36-40) de la cage (32), la taille des ouvertures (36-40) correspondant à la taille des parties saillantes des tirants (9-13) de maintien.

5. Dispositif selon la revendication 4, caractérisé en ce que la cage (32) présente un élément de cage (33) en forme de coupelle dont une paroi latérale (35) est pourvue d'ouvertures (36- 40) pour les tirants (9-13) de maintien et en ce que la paroi latérale présente des crochets (41-45) qui s'encliquètent dans des ouvertures (46-50) d'une paroi frontale (44) de cage et maintiennent celle-ci sur l'élément de cage (33) en forme de coupelle.

6. Dispositif selon l'une des revendications précédentes, caractérisé en ce que la partie centrale (22) et les tirants (9-13) de maintien qui sont d'une pièce sont réalisés dans la même matière, avantageusement une gomme ou un caoutchouc.

7. Dispositif selon l'une des revendications précédentes, caractérisé en ce que chaque tirant (9-13) de maintien comporte plusieurs ouvertures (53, 54) ou sections minces pour des crochets (55-59), ces crochets (55-59) étant à l'état monté accrochés sur la roue, les ouvertures (53, 54) ou sections minces étant disposées par rapport à la partie centrale (22) les unes derrière les autres.

8. Dispositif selon la revendication 7, caractérisé en ce que, dans les ouvertures (53, 54), sont accrochés des crochets (55-59) en forme de S, de C, ou de T afin de pouvoir s'accrocher dans les trous de différentes roues.

9. Dispositif selon la revendication 7 ou 8, caractérisé en ce que chaque tirant (9-13) de maintien présente des surépaisseurs transversales (60, 61) pour saisir les crochets (55-59) accrochés dans les ouvertures (53, 54).

10. Dispositif selon l'une des revendications précédentes, caractérisé en ce que chaque tirant (9-13) de maintien présente à sa section extréma-

le libre des éléments de préhension transversaux (62).

FIG.1

FIG.2

# FIG.3

# FIG.4